**Europäisches Patentamt**

**European Patent Office**

**Office européen des brevets**

(11) Veröffentlichungsnummer: **0 433 562 A2**

(12) **EUROPÄISCHE PATENTANMELDUNG**

(21) Anmeldenummer: **90117249.4**

(22) Anmeldetag: **07.09.90**

(51) Int. Cl.⁵: **A01C 17/00**

(30) Priorität: 09.02.90 DE 4003945
28.06.90 DE 4020574
26.05.90 DE 4017026
27.04.90 DE 4013532
24.11.89 DE 3938921
03.11.89 DE 3936633

(43) Veröffentlichungstag der Anmeldung:
**26.06.91 Patentblatt 91/26**

(84) Benannte Vertragsstaaten:
**AT BE DE DK ES FR GB NL SE**

(71) Anmelder: **Amazonen-Werke H. Dreyer GmbH
& Co. KG
Am Amazonenwerk 9-13
W-4507 Hasbergen-Gaste(DE)**

(72) Erfinder: **Dreyer, Heinz, Dr. Dipl.-Ing.
Am Amazonenwerk 7
W-4507 Hasbergen(DE)**

(54) **Schleuderdüngerstreuer.**

(57) Schleuderdüngerstreuer mit einem Rahmen, einem Vorratsbehälter, der in seinem unteren Bereich durch ein dachförmiges Mittelteil in zwei Trichterspitzen unterteilt ist, wobei unterhalb jeder Trichterspitze eine rotierend angetriebene Schleuderscheibe mit Wurfschaufeln angeordnet ist, wobei die Schleuderscheiben jeweils auf einer Antriebswelle eines Getriebes angeordnet sind, wobei die Antriebswellen bzw. ihre Verlängerungen jeweils ein Rührorgan direkt antreiben bzw. tragen. Um einen einfach aufgebauten Schleuderdüngerstreuer mit auf die verschiedenen Düngersorten optimalen einzustellenden Wurfschaufeln zu schaffen, ist vorgesehen, daß die Wurfschaufeln (44,45) auf den Schleuderscheiben (6) winkelverschwenkbar angeordnet sind, und daß im Bereich der verschwenkbaren Wurfschaufeln (44,45) Einstellskalen (58,59) für die Schaufeln (44,45) auf der Schleuderscheibe (6) angeordnet sind.

FIG. 5

EP 0 433 562 A2

## SCHLEUDERDÜNGERSTREUER

Die Erfindung betrifft einen Schleuderdüngerstreuer mit einem Rahmen gemäß Oberbegriff des Patentanspruches 1.

Ein derartiger Schleuderdüngerstreuer ist beispielsweise durch das deutsche Gebrauchsmuster 77 39 597 bekannt. Dieser Schleuderdüngerstreuer weist einen Vorratsbehälter auf, der in seinem unteren Bereich durch ein dachförmiges Mittelteil in zwei Trichterspitzen aufgeteilt ist. Unterhalb dieser beiden symmetrisch zur Streuermitte angeordneten Trichterspitzen ist jeweils eine rotierend angetriebe-ne Schleuderscheibe mit Wurfschaufeln unter-schiedlicher Länge angeordnet. Die Schleuder-scheiben sind jeweils drehfest auf den aus einem Getriebegehäuse herausragenden Schleuderscheibenantriebswellen befestigt und werden in entgegengesetztem Drehsinn zueinander angetrieben. Die jeweilige Schleuderscheibenantriebswelle ragt von unten durch den Behälterboden in das Innere des Vorratsbehälters hinein. An ihrer Oberseite trägt die in den Vorratsbehälter hineinragende Schleuderscheibenantriebswelle ein Rührorgan, welches eine rührwerksähnliche Wirkung besitzt und die sich im Vorratsbehälter befindlichen Düngemittel den beiderseits zur Streuermitte symmetrisch gelegenen Auslauföffnungen zuführt. Die Auslauföffnungen sind mittels der davor angeordneten Schieber zu schließen und zu öffnen sowie in unterschiedliche Öffnungsweiten einzustellen. Die den Schleuderscheiben in genau einstellbaren Mengen zuführbaren Düngemittel werden mittels der Wurfschaufel in Breitverteilung auf den Boden verteilt.

Der Erfindung liegt die Aufgabe zugrunde, einen einfach aufgebauten Schleuderdüngerstreuer mit auf die verschiedenen Düngersorten optimal einzustellenden Wurfschaufeln zu schaffen.

Diese Aufgabe wird in erfindungsgemäßer Weise dadurch gelöst, daß die Wurfschaufeln auf den Schleuderscheiben winkelverschwenkbar angeordnet sind, und daß im Bereich der verschwenkbaren Wurfschaufeln Einstellskalen für die Schaufeln auf der Schleuderscheibe angeordnet sind.

Infolge dieser Maßnahmen läßt sich der in erf indungsgemäßer Weise ausgerüstete Schleuder-düngerstreuer entsprechend den jeweils vorherr-schenden Einsatzbedingungen, d.h., der gewünschten Arbeitsbreite und unter Berücksichtigung der spezifischen Streuguteigenschaften des auszustreuenden Materials, durch eine exakte, den je-weils gewünschten Einsatzverhältnissen entspre-chende Einstellung der auf den Schleuderscheiben angeordneten Wurfschaufeln anhand einer Streutabelle anzupassen. Hierdurch wird eine gleichmäßige Verteilung der Düngemittel erreicht und ein optimales Streubild erzeugt. Durch die Winkeleinstell-barkeit der Wurfschaufeln in Schleuderscheiben-ebene läßt sich das Streubild für sämtliche Windverhältnisse optimieren, so daß immer ein gutes Streubild und eine ausreichend gleichmäßige Düngerverteilung erzielt wird. Durch die winkelverschwenkbare Anordnung der Wurfschaufeln lassen sich diese stufenlos innerhalb des Verstellbereiches einstellen, so daß sich die Wurfschaufeln für jede Düngersorte in die optimale Stellung einstellen lassen.

Damit eine unverwechselbare Einstellung der in verschiedenen Positionen auf den Schleuderscheiben eines Schleuderdüngerstreuers befestigbaren Wurfschaufeln gewährleistet ist, ist erfindungemäß vorgesehen, daß zumindest zwei Wurfschaufeln auf jeder Schleuderscheibe angeordnet sind, daß für sich jede Wurfschaufel bei Einstellung des horizontalen Abwurfwinkels Einstellmarkierungen auf der Schleuderscheibe befinden, welche unterschiedlich ausgebildet und/oder bezeichnet sind, und zwar derart, daß die Markierungspunkte eindeutig und unverwechselbar jeweils einer Wurfschaufel zugeordnet sind. Hierdurch lassen sich die Wurfschaufeln entsprechend den jeweils vorherrschenden Einsatzbedingungen anhand einer Streutabelle vornehmen, wobei die der Streutabelle entnommenen Einstelldaten eindeutig und unverwechselbar nur auf eine Wurfschaufel zu übertragen sind, so daß die der Streutabelle entnommenen Einstelldaten nicht vertauscht werden können und so versehentlich einer falschen Wurfschaufel zugeordnet werden.

Die anhand der Streutabelle vorgenommene Einstellung der Wurfschaufeln wird evtl. durch einen vor der eigentlichen Streuarbeit durchgeführten Streuversuch mit einem mobilen Prüfstand überprüft. Weicht das bei diesem Streuversuch ermittelte Streubild von dem gewünschten Streubild ab, läßt sich auf einfachste Weise eine Streubildkorrektur vornehmen. Entsprechend des ermittelten Streubildes nimmt der Landwirt eine Streubildkorrektur durch das entsprechende Verschwenken der Wurfschaufeln auf der Schleuderscheibe vor. Der Landwirt wird die den entsprechenden Streusektor bestreuende Wurfschaufel entweder vor oder zurück verschwenken. Hierbei ist in erfindungsgemäßer Weise vorgesehen, daß die Markierungspunkte unerwechselbare Symbole, insbesondere Zahlen, in Drehrichtung der Schleuderscheiben jeweils ansteigend auf der Skala aufweisen. Hierdurch ist es für den Landwirt leicht verständlich, die Wurfschaufeln auf eine höhere Zahl einstellen zu müssen, wenn die im Streuversuch ermittelte tatsächliche Arbeitsbreite gegenüber der gewünschten Arbeitsbreite zu klein ist.

Anderseits ist es für den Landwirt leicht verständlich, die Wurfschaufeln auf eine niedrigere Zahl zu stellen, wenn die im Streuversuch ermittelte tatsächliche Arbeitsbreite gegenüber der gewünschten Arbeitsbreite zu groß ist.

Um eine weitere Verbesserung und Übersichtlichkeit der Einstellung der Wurfschaufeln anhand von Streutabellen oder anderer Maschineneinstelldaten zu erreichen, ist erfindungsgemäß vorgesehen, daß der längeren und/oder der innerhalb der Arbeitsbreite weiter nach außen streuenden Wurfschaufel die Symbole höherer Rangordnung und der kürzeren und/oder der innerhalb der Arbeitsbreite weiter nach innen streuenden Wurfschaufel die Symbole niedriger Rangordnung zugeordnet sind. Somit ist sofort anhand der vorgegebenen Werte erkennbar, daß die Symbole niedriger Rangordnung der kürzeren und/oder weiter nach innen streuenden Wurfschaufel und die Symbole höherer Rangordnung der längeren und/oder weiter nach außen streuenden Wurfschaufel zugeordnet sind. Der Landwirt muß dann während der Einstellung nicht so lange nach den richtigen Werten suchen.

Desweiteren ist vorgesehen, daß den kürzeren und/oder weiter nach innen streuenden Wurfschaufeln der beiden Schleuderscheiben die gleichen Symbole niedriger Rangordnung zugeordnet sind, während den längeren und/oder weiter nach außen streuenden Wurfschaufeln der beiden Schleuderscheiben ebenfalls die gleichen Symbole höherer Rangordnung zugeordnet sind. Hierdurch wird die Angabe in der Streutabelle vereinfacht und Einstellungsfehler vermieden.

In besonderen Einsatzverhältnissen kann es jedoch wünschenswert sein, daß jeder Wurfschaufel aller Schleuderscheiben jeweils eigene und unverwechselbare Symbole zugeordnet sind. Dieses ist vor allem für eine gezielte Streubildkorrektur wünschenswert, weil jede Wurfschaufel einen bestimmten Sektor abstreut. Somit ist dann jeder eigene Sektor übersichtlich korrigierbar.

In einer weiteren Ausführungsform ist erfindungsgemäß vorgesehen, daß die auf einer Schleuderscheibe angeordneten Wurfschaufeln aus gleichlangen Wurfschaufeln bestehen, daß die eine Wurfschaufel derart ausgebildet und/oder einstellbar ist, daß sie die Düngemittelpartikel weiter nach innen, also in den inneren Bereich dar Arbeitsbreite abschleudert, und daß die andere Wurfschaufel die Düngemittelpartikel weiter nach außen, also in den äußeren Bereich der Arbeitsbreite abschleudert, daß der die Düngemittel weiter nach außen streuenden Wurfschaufel die Symbole höherer Rangordnung und das der die Düngemittel weiter nach innen streuenden Wurfschaufel die Symbole niedriger Rangordnung zugeordnet sind. Infolge dieser Maßnahmen lassen sich die Düngemittelpartikel auch mit gleichlangen Wurfschaufeln gleichmäßig über die gesamte Arbeitsbreite des Schleuderdüngerstreuers abschleudern, weil jede Wurfschaufel einen bestimmten Sektor abstreut, wobei dann zur Streubildkorrektur jeder eigene Sektor übersichtlich korrigierbar ist.

Beim Einsatz von gleichlangen Wurfschaufeln auf den Schleuderscheiben weist die die Düngemittelpartikel weiter nach innen abschleudernde jeweilige Wurfschaufel Elemente auf, die zum Reduzieren der Flugbahnen der von dieser Wurfschaufel abgeschleuderten Düngemittelpartikel führt, so daß die Düngemittel von den Wurfschaufeln in unterschiedlichen Streusektoren abgeschleudert werden.

In einer besonders bevorzugten Ausführungsform ist in erfindungsgemäßer Weise vorgesehen, daß die Wurfschaufeln mittels Knebelschrauben werkzeuglos verstellbar bzw. einstellbar auf den Schleuderscheiben angeordnet sind, wobei je Wurfschaufel nur eine Knebelschraube vorgesehen ist, wobei diese Knebelschraube in der Nähe des äußeren Randes und unter der Schleuderscheibe angeordnet ist. Hierdurch lassen sich die Wurfschaufeln auf einfachste Weise in den unterschiedlichen Winkellagen an den Schleuderscheiben befestigen.

Um die Wurfschaufeln in der anhand einer Streutabelle vorgeschriebenen Position genau einstellen zu können, ist die Unterwand der Wurfschaufel als Zeigerelement ausgebildet und wirkt mit der entsprechenden Einstellskala auf der Schleuderscheibe zusammen. Hierbei können die Einstellskalen entweder direkt auf der Schleuderscheibe oder auf dem schräg nach außen und unten verlaufenden Rand der Schleuderscheibe angeordnet sein.

Zur einfachen Befestigung der Wurfschaufeln auf den Schleuderscheiben ist erfindungsgemäß vorgesehen, daß die Wurfschaufeln auf ihrer der Drehachse zugewandten Seite in ihrem unteren Steg einen in radialer Richtung verlaufenden Schlitz aufweisen, welcher auf der inneren Seite nach außen offen ist, daß auf der Schleuderscheibe ein innerer Bolzen mit einem gegenüber dem Bolzen einen größeren Durchmesser aufweisenden Kopf angeordnet ist, und daß der Schlitz der Wurfschaufel auf den Bolzen aufschiebbar ist. Hierdurch ergibt sich auf einfachste Weise ein innerer Befestigungspunkt für die jeweilige Wurfschaufel, um die sich die Wurfschaufel einfach verschwenken läßt. Dieses Verschwenken der Wurfschaufeln erfolgt in dem innerhalb der sich durch die in den Schleuderscheiben befindlichen Langloch vorgegebenen Verstellbereiche. In das jeweilige Langloch greift eine Knebelschraube, mit der die Wurfschaufeln auf den Schleuderscheiben in den unterschiedlichsten Positionen befestigt werden.

Die austauschbar auf den Schleuderscheiben angeordneten Wurfschaufeln können beispielsweise Wurfschaufeln zum Normalstreuen sein, bei denen die Düngemittel auf einer zu bestreuenden Fläche ausgestreut werden, die keinen oder nur einen Pflanzenbewuchs geringer Aufwuchshöhe aufweist.

Ein sehr einfacher Schnellverschuß zur Anordnung der verschiedenen Wurfschaufeln auf den Schleuderscheiben ergibt sich dadurch, daß der Schnellverschluß als Knebelschraube und/oder Knebelmutter ausgebildet ist. Mittels des Schnellverschlusses können die Wurfschaufeln leicht gegen andere Wurfschaufeln ausgetauscht und gleichzeitig im Winkel entsprechend den in der Streutabelle entnommenen Angaben eingestellt werden. Darüberhinaus ist es durch den Schnellverschluß möglich, das die Wurfschaufeln an einer entsprechenden Halterung, die sich an dem Rahmen oder an dem Vorratsbehälter befindet, leicht befestigt werden können, ohne daß sie verloren gehen. Mittels der Knebelschraube sind die Wurfschaufeln äußerst vorteihaft werkzeuglos verstellbar bzw. einstellbar auf den Schleuderscheiben angeordnet. Gleichzeitig sind die Wurfschaufeln mittels des Schnellverschlusses werkzeuglos austauschbar befestigt.

Soll der Schleuderdüngerstreuer für das Reihendüngerstreuen, z.B. von Maiskulturen, mit einer Reihendüngerstreuvorrichtung eingesetzt werden, sind diese Wurfschaufeln zum Normalstreuen gegen wesentlich kürzere Wurfschaufeln zum Reihendüngerstreuen austauschbar.

Erfolgt das Ausstreuen des Düngers am Feldrand mit halbseitig reduzierter Arbeitsbreite, sind für dieses sog. Grenzstreuen spezielle Wurfschaufeln vorgesehen, deren äußeres, wurfaktives Ende einen wesentlich kürzeren Abstand zur Drehachse als die Normalstreuschaufeln aufweisen, und daß diese Grenzstreuschaufeln ebenfalls winkelverschenkbar auf den Schleuderscheiben angeordnet sind. Hierbei ist dann vorgesehen, daß die Grenzstreuschaufeln wesentlich kürzer als die Normalstreuschaufeln sind, aber zugleich derart ausgebildet sind, daß sie mit den Skalen zusammenwirken und zwar derart, daß sie auf den gleichen Skalenwert eingestellt werden, wie die Normalstreuschaufeln für die gleiche Düngerart und Arbeitsbreite. Hierdurch ist es beim Einsatz dieser Grenzstreuschaufeln nur notwendig, die Normalstreuschaufeln gegen die Grenzstreuschaufeln auszutauschen, wobei der Zeiger der jeweiligen Grenzstreuschaufel einfach wieder auf den Einstellwert für die Normalstreuschaufel eingestellt wird, so daß der Landwirt nicht wieder in die Streutabelle sehen muß, um einen neuen Einstellwert zu ermitteln. Dieses stellt eine wesentliche Vereinfachung hinsichtlich der Handhabung dar und macht eine zusätzliche Streutabelle für die Grenzstreuschaufeln überflüssig.

In einer besonders bevorzugten Ausführungsform ist in erfindungsgemäßer Weise vorgesehen, daß zum Grenzstreuen nur eine Wurfschaufel pro Schleuderscheibe eingesetzt wird, oder aber daß nur die längere der Normalstreuschaufeln gegen eine kürzere Grenzstreuschaufel ausgetauscht wird, wenn der Schleuderdüngerstreuer zum Grenzstreuen eingesetzt wird.

Es ist erfindungsgemäß vorgesehen, daß die eingetauschte Grenzstreuschaufel genauso lang oder kürzer als die kurze Normalstreuschaufel ist. Vorzugsweise ist die Grenzstreuschaufel als Teleskopschaufel ausgebildet, um sich so den unterschiedlichen Grenzstreuabschnitten vom Feldrand anpassen zu können.

In einer weiteren erfindungsgemäßen Ausführungsform ist vorgesehen, daß die Wurfschaufeln auf den Schleuderscheiben abnehmbar angeordnet sind, daß nach Abnahme der Wurfschaufel von einer der beiden Schleuderscheiben eine Auffangvorrichtung auf oder im Bereich dieser Schleuderscheibe anzuordnen ist, und daß unterhalb der Auffangvorrichtung ein Auffangbehälter anzuordnen ist. Weiterhin ist vorgesehen, daß nach Abnahme der Wurfschaufeln von der Schleuderscheibe eine Abstreifvorrichtung auf dieser Schleuderscheibe angeordnet wird, und daß am Ende der Abstreifvorrichtung ein Auffangbehälter, beispielsweise ein untergehängter Eimer, angeordnet ist. Hierdurch läßt sich mit einfachsten Mitteln die Abdrehprobe oder Mengenkontrolle bei einem Schleuderdüngerstreuer mit nicht abnehmbaren Schleuderscheiben nach Abnahme der Wurfschaufeln von der Schleuderscheibe, welche zur Ermittlung der dieser Schleuderscheibe vom Dosiermechanismus zu dosierten Düngermenge pro Flächeneinheit herangezogen wird, durchführen.

Weitere Einzelheiten der Erfindung sind den übrigen Unteransprüchen, der Beispielsbeschreibung und den Zeichnungen zu entnehmen. Hierbei zeigt

Fig. 1 den in erfindungsgemäßer Weise ausgerüsteten Schleuderdüngerstreuer in Prinzipdarstellung und in der Ansicht von hinten,

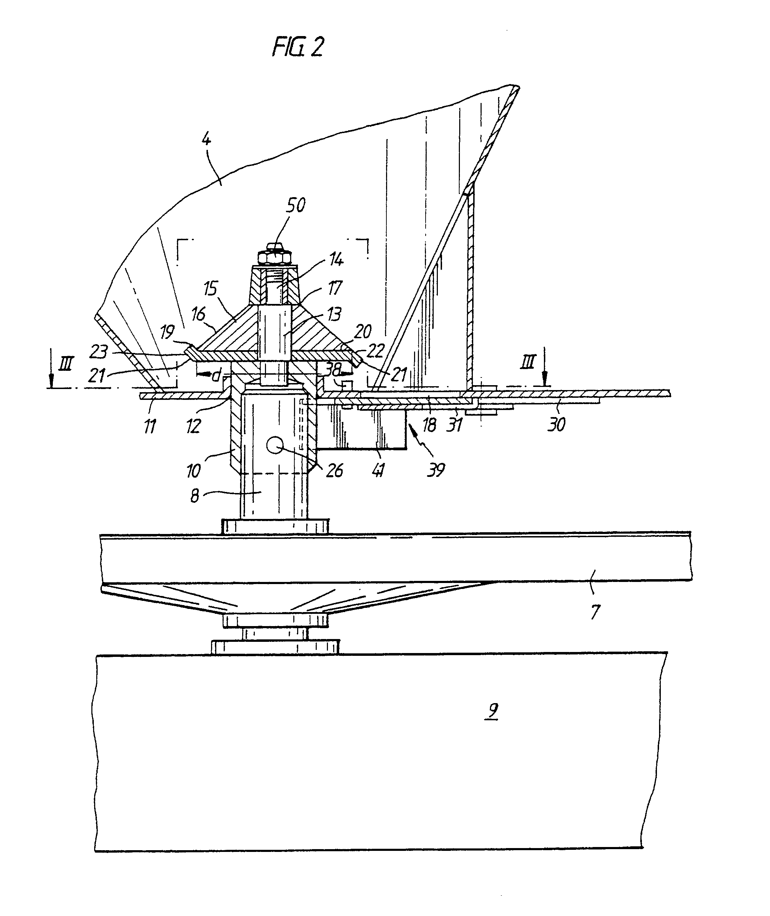

Fig. 2 Teilansicht des in Fahrtrichtung gesehen linken Auslauftrichters in Schnittdarstellung in der Ansicht II - II und in vergrößertem Maßstab,

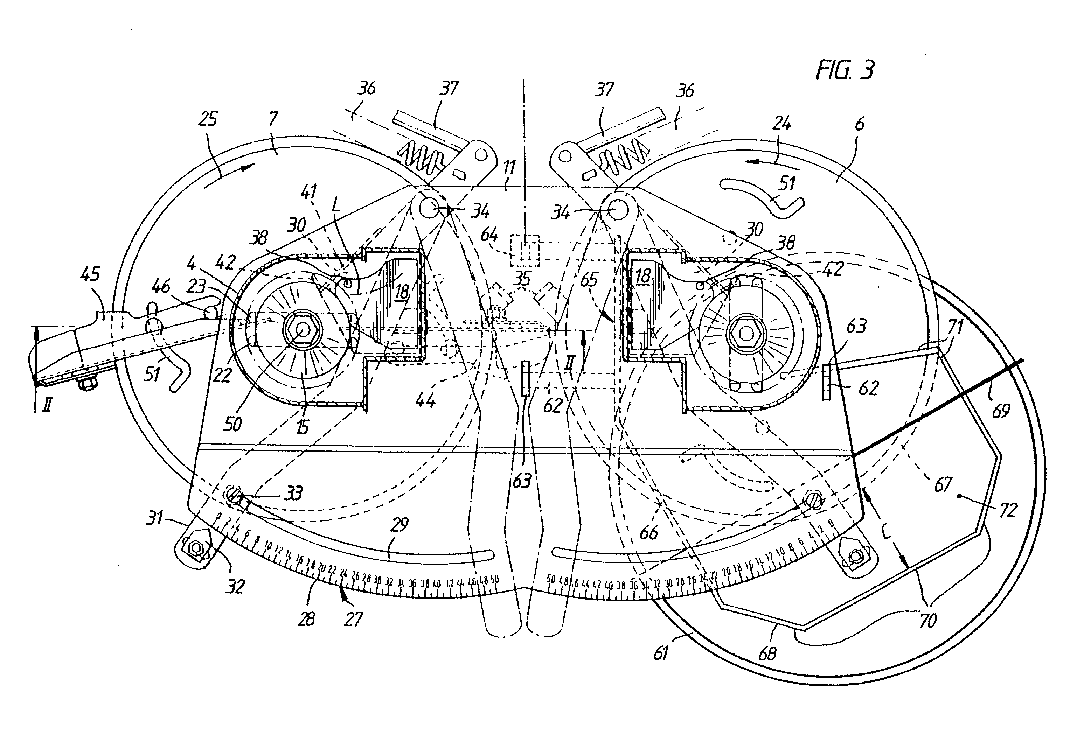

Fig. 3 die Bodenplatte mit dem untersten Querschnitt der beiden Auslauftrichter in der Ansicht III - III, wobei sich unterhalb der in Fahrtrichtung gesehen rechten Schleuderscheibe eine Auffangvorrichtung zur Durchführung einer Abdrehprobe befindet, in einem anderen Maßstab,

Fig. 4 eine weitere Teilansicht des in Fahrtrichtung gesehen linken Auslauftrichters in Schnittdarstellung gemäß Fig. 2, wobei ein andersartig in die Trichterspitze hineinragendes Rührorgan auf der Schleuderscheibenantriebswelle angeordnet ist,

Fig. 5 die rechte Schleuderscheibe des Schleuderdüngerstreuers, wobei sich Wurfschaufeln für das Normalstreuen auf der Schleuderscheibe befinden, in Teilansicht und vergrößertem Maßstab,

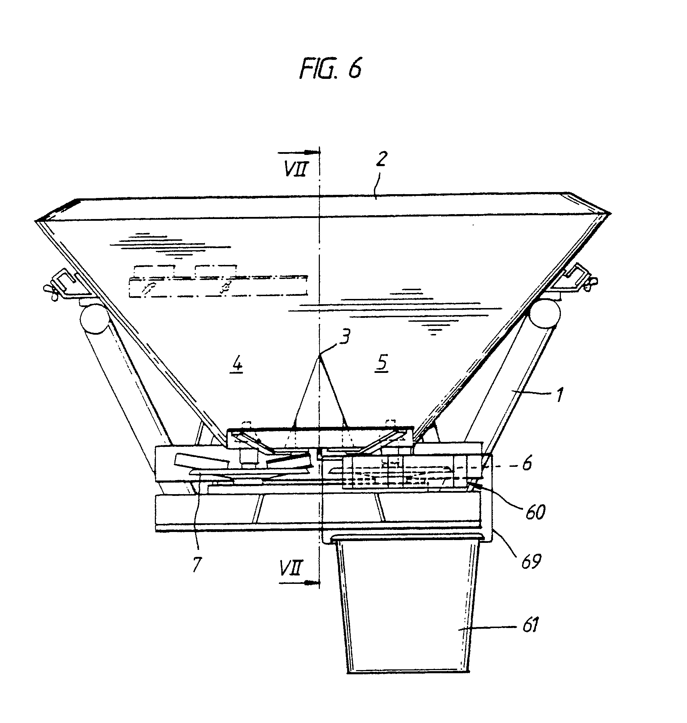

Fig. 6 der Schleuderdüngerstreuer gemäß Fig. 1, wobei zur Durchführung einer Abdrehprobe die Wurfschaufeln der rechten Schleuderscheibe abgenommen worden sind und im Bereich dieser Schleuderscheibe eine Auffangvorrichtung für die dieser Schleuderscheibe zugeführten Düngemittel angeordnet ist und

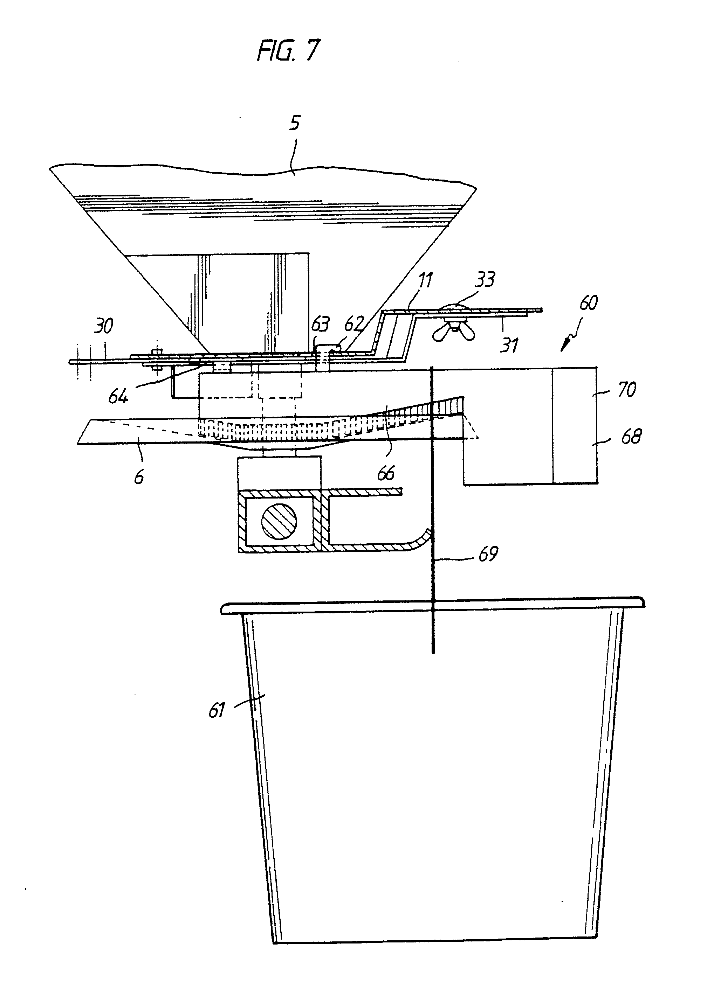

Fig. 7 Teilansicht und Prinzipdarstellung des rechten Auslauftrichters in der Ansicht VII - VII,

Fig. 8 Prinzipdarstellung der Schleuderscheibe gemäß Fig. 5, in verkleinertem Maßstab, wobei die lange Wurfschaufel gegen eine spezielle Grenzstreuschaufel ausgetauscht ist,

Fig. 9 die rechte Schleuderscheibe des Schleuderdüngerstreuers, wobei beide Wurfschaufeln als spezielle Grenzstreuschaufeln ausgebildet sind,

Fig. 10 die rechte Schleuderscheibe des Schleuderdüngerstreuers in Teilansicht und Schnittdarstellung mit der langen Wurfschaufel für das Normalstreuen, wobei sich die Wurfschaufel in der Normalstreurichtung gemäß Fig. 17 befindet,

Fig. 11 die Schleuderscheibe mit der Wurfschaufel gemäß Fig. 10, wobei die von dieser Wurfschaufel abgeschleuderten Düngemittel durch die nach oben gegenüber der Normalstreurichtung gerichtete untere Leitfläche zum Spätdüngen abgeschleudert werden,

Fig. 12 die rechte Schleuderscheibe des Schleuderdüngerstreuers, wobei die Normalstreuschaufel gegen die spezielle Grenzstreuschaufel ausgetauscht worden ist, wobei sich die Grenzstreuschaufel in Normalstreurichtung befindet und

Fig. 13 die Schleuderscheibe und die Wurfschaufel gemäß Fig. 12, wobei die untere Leitfläche der Wurfschaufel gegenüber der Normalstreurichtung zum Spätdüngen nach oben gerichtet ist.

Der Schleuderdüngerstreuer weist den Rahmen 1 und den Vorratsbehälter 2 auf. Auf der Vorderseite des Rahmens 1 sind in bekannter und daher nicht näher dargestellter Weise Dreipunktkupplungselemente zum Anbau des Schleuderdüngerstreuers an den Dreipunktkraftheber eines Schleppers angeordnet. Der Vorratsbehälter ist durch das dachförmige Mittelteil 3 in seinem unteren Bereich in die beiden Auslauftrichter 4 und 5 aufgeteilt. Unterhalb der Auslauftrichter 4 und 5 befindet sich jeweils die rotierend angetriebene Schleuderscheibe 6 bzw. 7, die auf den Getriebeausgangswellen 8 des Zahnradgetriebes 9 angeordnet sind und ineinander entgegengesetztem Drehsinn rotierend von einer Kraftquelle, beispielsweise eines Ölmotors oder der Zapfwelle des den Schleuderdüngerstreuer tragenden Schleppers, angetrieben werden. Die Schleuderscheibenantriebswellen 8 sind mittels des jeweiligen Wellenstückes 10, welches auf die Getriebeausgangswellen 8 aufgesetzt ist, durch die sich in der Bodenplatte 11 befindliche Durchtrittsöffnung 12 bis in die jeweilige Auslauftrichterspitze 4 bzw. 5 des Vorratsbehälters 2 hineingeführt. Auf der Oberseite des Wellenstückes 10 ist der Bolzen 13 mit gegenüber dem Wellenstück 10 reduziertem Durchmesser befestigt. Am Ende des Bolzens 13 befindet sich der ebenfalls einen reduzierten Durchmesser aufweisende Schraubbolzen 14. Mit dem Schraubbolzen 14 ist das Rührorgan 15 befestigt.

Dieses Rührorgan 15 besteht aus dem etwa rotationssymmetrischen Zubringerkörper 16, der kegel- oder kegelstumpfförmig mit seiner Spitze 17 nach oben weisend ausgebildet ist, und dessen größter Durchmesser d bis in die Nähe der in der Bodenplatte 11 sich befindlichen Auslauföffnung 18 reicht. Unterhalb des rotationssymmetrischen Zubringerkörpers 16 befindet sich der rotierende Auswerfer 19. Dieser Auswerfer 19 ist aus Stahl, vorzugsweise aus einem hochfesten und/oder nichtrostendem Stahl hergestellt und auswechselbar auf der Antriebswelle 8, d. h. auf dem Bolzen 13 des Wellenstückes 10 angeordnet. Hierbei greift der Auswerfer 19 in die auf der Unterseite 20 des Zubringerkörpers 16 aufweisenden Aussparungsnut ein. Dieser unterhalb des Zubringerkörpers 16 angeordnete Auswerfer 19 überragt den Zubringerkörper 16 beidseitig auf diametral gegenüberliegenden Seiten mit kleinen Abständen, wobei der Auswerfer 19 in seinem den Zubringer überragenden Bereich horizontal und rechtwinklig zur Antriebswelle 8 ausgebildet ist. Der über den größten Bereich des Zubringerkörpers 16 jeweils überstehende Bereich 21 weist die beiden Auswerferfinger 22 und 23 auf, wobei der eine Auswerferfinger 22 nach oben und der andere Auswerferfinger 23 nach unten abgebogen ist. Um den Auswerfer 19 vor Beschädigungen durch sich im Dünger befindliche harte Gegenstände, z. B. Steine, zu schützen, ist der Auswerfer 19 elastisch und entgegen der Drehrichtung 24 bzw. 25 ausweichbar auf der Antriebswelle, d. h. auf dem mittels des Stiftes 26 drehfest mit der Antriebswelle 8 verbundenen Wellenstück 10, angeordnet.

Der unterhalb des rotationssymmetrischen Zubringerkörpers 16 sich befindliche Auswerfer 19 überstreicht die Auslauföffnung 18 in dem den Rührorgan 15 benachbarten Teil des untersten Querschnittes der Auslauftrichter 4 bzw. 5. Mittels des Rührorgans 15 werden die sich im Vorratsbehälter 2 befindlichen Düngemittel der jeweiligen, in der Bodenplatte 11 sich befindlichen Auslauföffnung 18 zugeführt. Diese, die Auslauftrichter 4 und 5 nach unten verschließende Bodenplatte 11 ist durchgehend ausgebildet und weist auf der Rückseite 27 die beiden spiegelbildlich nebeneinander liegenden, etwa horizontal angeordneten Einstellskalen 28 auf. Vor diesen Einstellskalen 28 befinden sich auf der Rückseite des Vorratsbehälters 2 die etwa horizontal nebeneinanderliegenden und spiegelbildlich ausgebildeten Langlöcher 29 in der einstückig ausgebildeten Bodenplatte 11. Die Einstellskalen 28 und die Langlöcher 29 befinden sich in dem stufenförmig nach oben abgewinkelten Bereich der Bodenplatte 11. Diese Einstellskalen 28 dienen zum Einstellen der gewünschten Ausbringmenge des Schleuderdüngerstreuers, d. h. der Öffnungsweite der von den Schiebern 30 in unterschiedlichen Öffnungsweiten einstell- und verschließbaren Auslauföffnungen 18. Die jeweils gewünschte Ausbringmenge läßt sich über den Öffnungsquerschnitt der Auslauföffnungen 18 einstellen, wobei ein bestimmter Öffnungsquerschnitt einer ganz bestimmten Ausbringmenge unter Berücksichtigung der jeweils sich im Vorratsbehälter befindlichen Düngersorte entspricht. Das Einstellen des Öffnungsquerschnittes erfolgt in der Weise, daß zunächst der Anschlaghebel 31 auf einen bestimmten Skalenwert der Einstellskala 28 eingestellt wird, wobei der eingestellte Wert sich am Zeiger 32 des Anschlaghebels 31 ablesen läßt. Dieser Einstellwert wird z. B. einer Streutabelle entnommen. Nachdem der Zeiger 32 auf einen bestimmten Einstellwert eingestellt wurde, wird der Anschlaghebel 31 in dieser Position mittels der mit dem Langloch 29 zusammenwirkenden Einstellschraube 33 an der Bodenplatte 11 befestigt. Der Anschlaghebel 31 ist ebenso wie der Schieber 30 um den Drehpunkt 34 verschwenkbar an der Bodenplatte 11 angelenkt. Der jeweilige Anschlaghebel 31 dient als Anschlagelement für den Schieber 30, wobei der Schieber 30 an dem als Anschlag 35 ausgebildeten Winkelstück zur Anlage kommt, so daß der eingestellte Öffnungsquerschnitt der Auslauföffnungen 18 immer wieder exakt und in fehlerlos wiederholbarer Weise einstellbar ist, wobei die Feder 36 den Schieber 30 gegen das Anschlagelement 35 zieht. Soll die Auslauföffnung 18 geschlossen werden, wird der Hydraulikzylinder 37 mit Drucköl beaufschlagt, so daß der Schieber 30 in seine Schließstellung überführt wird. Der Anschlaghebel 31 läßt sich über den Bereich des jeweiligen Langloches 29 verstellen. Der jeweilige Schieber 30 weist auf seiner der Auslauföffnung 18 und der dem Vorratsbehälterinnenraum zugewandten Seite im Bereich der kleinsten Öffnungsweite der Auslauföffnung 18 das Verdränger- und/oder Aufbrechelement 38 auf, welches bei Betätigung der jeweiligen Schiebern 30 zum Zerstören von sich evtl. aufgebauten Brückenbildungen dient.

Auf der Unterseite 39 des jeweiligen Schiebers 30 direkt unterhalb ihrer Öffnungskante 40, ist eine senkrecht nach unten verlaufende Ablenkplatte 41 angeordnet, die in Drehrichtung 24 bzw. 25 der jeweiligen Schleuderscheibe 6 bzw. 7 gesehen an ihrem Ende eine zum Schleuderscheibenrand weisende Abkantung 42 aufweist. Diese Ablenkplatte 41 mit der Abkantung 42 gewährleistet eine exakte Düngeraufgabe des durch die jeweilige Auslauföffnung 18 hindurchrieselnden Düngers auf die jeweilige Schleuderscheibe 6 bzw. 7. Die Ausbildung der jeweiligen Auslauföffnung 18 ist in Verbindung mit den Schiebern 30 derart ausgebildet, daß sich ausgehend von dem geschlossenen Zustand der Auslauföffnung 18, bei Vergrößerung des Auslaufquerschnittes der Auslauföffnung 18 durch Verstellung des jeweiligen Schiebers 30, der Aufgabeschwerpunkt des durch die Auslauföffnung 18 hindurchrieselnden Düngers auf jeder Schleuderscheiber 6 bzw. 7. auf einer derarten Linie L verlagert, die über den gesamten Öffnungsquerschnitt der Auslauföffnung 18 in Richtung auf den äußeren Rand der jeweiligen Schleuderscheibe 6 bzw. 7 verläuft. Hierdurch wird der Mengeneffekt ausgeschaltet und eine exakte Verteilung des Düngers über die gesamte Arbeitsbreite des Schleuderdüngerstreuers gewährleistet.

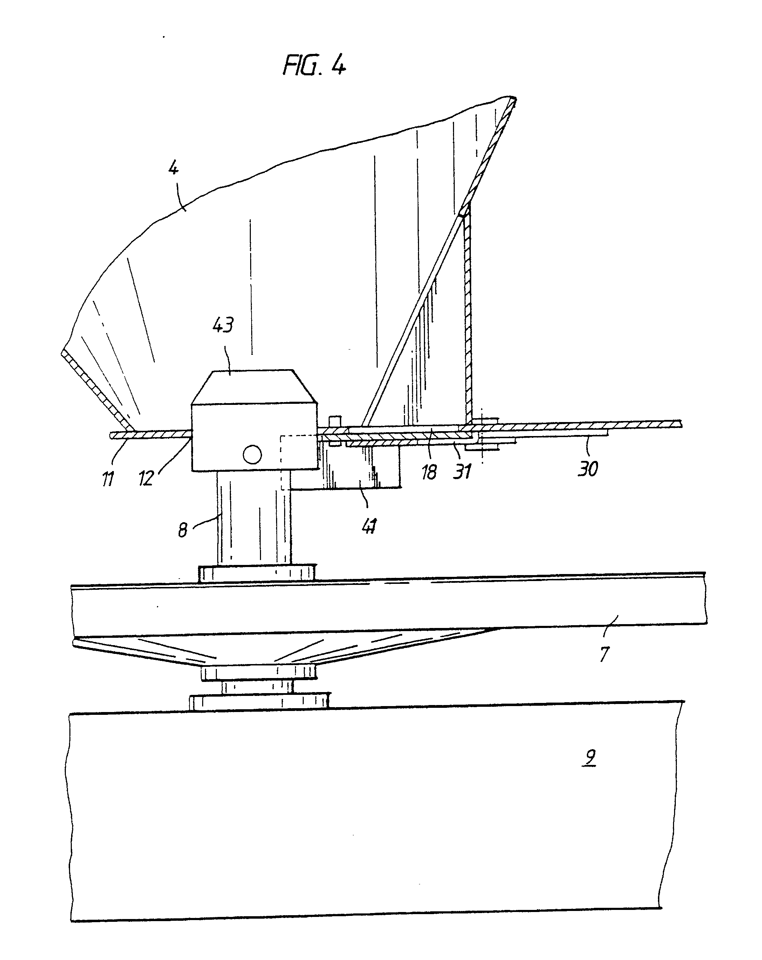

Die sich in der Bodenplatte 11 befindliche Durchtrittsöffnung 12 kann auch gemäß Fig. 4 ausgebildet sein, wobei das Rührorgan 43 von unten durch die Durchtrittsöffnung 12 bis in das Innere der Auslauftrichter 4 bzw. 5 hineinragt.

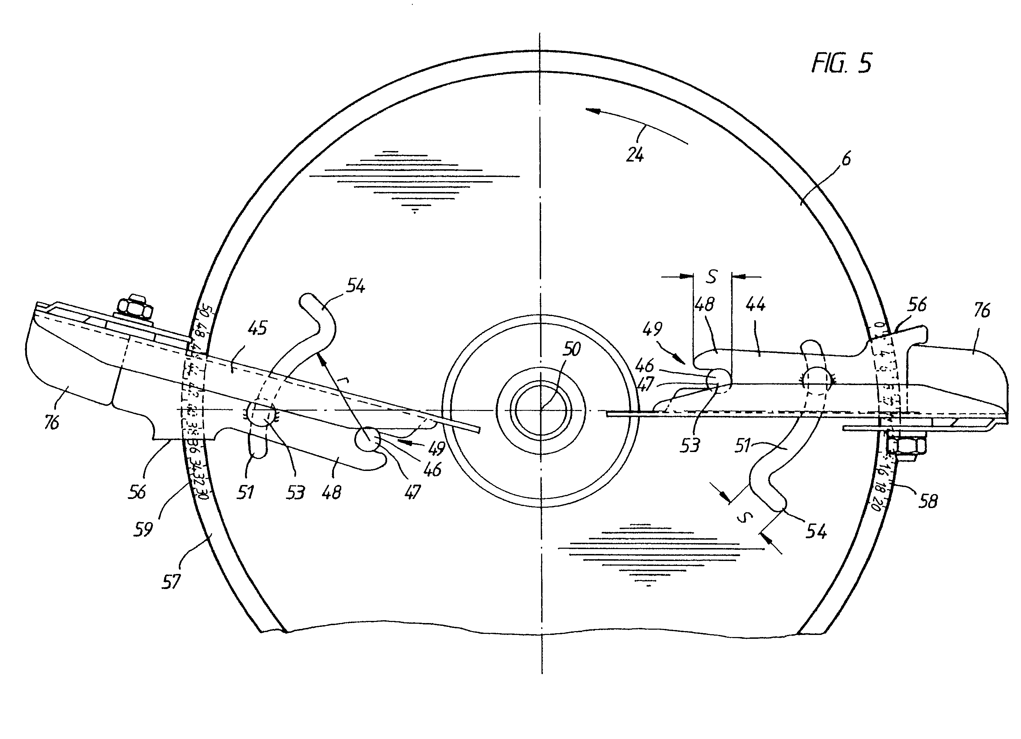

Die sich im Vorratsbehälter 2 befindlichen Düngemittel werden den Schleuderscheiben 6 bzw. 7 über die in unterschiedlichen Öffnungsweiten einstell- und verschließbaren Auslauföffnungen 18 zugeführt. Mittels der auf den Schleuderscheiben 6 bzw. 7 gemäß Fig. 5, wobei nur die rechte Schleuderscheibe 6 dargestellt ist, angeordneten, winkelverschwenkbaren Wurfschaufeln 44 und 45 wird der auf der jeweiligen Schleuderscheibe 6 bzw. 7 auftreffende Düngemittelstrom gleichmäßig über genau einstellbare Arbeitsbreite des Schleuderdüngerstreuers abgeschleudert. Die Wurfschaufel 44 weist eine kürzere Länge als die Wurfschaufel 45 auf, so daß die kürzere Wurfschaufel 44 die Düngemittelpartikel weiter nach innen, also in den inneren Bereich der Arbeitsbreite abschleudert und die längere Wurfschaufel 45 die Düngemittelpartikel weiter nach außen, also in den äußeren Bereich der Arbeitsbreite bzw. Streubreite abschleudert.

Jede Wurfschaufel 44 bzw. 45 ist um den inneren Bolzen 46 verschwenkbar auf der Schleuderscheibe 6 bzw. 7 befestigt. Dieser Bolzen 46 weist einen gegenüber dem Bolzen einen größeren Durchmesser aufweisenden Kopf 47 auf. Auf diesen Bolzen 46 ist die jeweilige Wurfschaufel 44 bzw. 45 mittels des sich im unteren Steg 48 befindlichen, in radialer Richtung verlaufenden Schlitz 49 aufschiebbar. Dieser Schlitz 49 befindet sich auf der der Drehachse 50 zugewandten Seite der Wurfschaufel und ist auf der inneren Seite nach außen offen. Im äußeren Bereich der Wurfschaufel 44 bzw. 45 sind über den Schwenkbereich der Wurfschaufeln 44 bzw. 45 mit dem Radius r gekrümmte Langlöcher 51 angeordnet. Durch diese Langlöcher 51 ist jeweils die mit dieser Knebelschraubenmutter 52 zusammenwirkende Schraube 53 gesteckt, die beispielsweise mit der jeweiligen Wurfschaufel 44 bzw. 45 verschweißt ist. Damit sich nun die um den Bolzen 46 verschwenkbaren Wurfschaufeln 44 bzw. 45 montieren bzw. demontieren lassen, weist das jeweilige Langloch 51 an dem einen Ende des Langloches 51 eine sich immer in radialer Richtung bzw. von der Tangentialen abweichenden Richtung eine Langlochverlängerung 54 auf. Die Länge 1 der Langlochverlängerung 54 entspricht der Schlitzlänge 5 des sich im unteren Steg befindlichen, in radialer Richtung verlaufenden Schlitzes 49.

Nach dem Lösen der sich auf der Unterseite 55 der Schleuderscheibe 6 bzw. 7 befindlichen Knebelschraubenmutter 52 läßt sich die jeweilige Wurfschaufel 44 bzw. 45 über den durch die Länge des jeweiligen Langloches 51 sich ergebenen Schwenkbereiches zur Anpassung der jeweils vorherrschenden Einsatzbedingungen, d.h., der jeweils auszustreuenden Düngersorte bzw. der gewünschten Arbeitsbreite verschwenken. Hierbei ist der untere Steg 48 als Zeigerelement 56 ausgebildet und wirkt mit der den jeweiligen Wurfschaufeln 44 bzw. 45 zugeordneten, sich auf dem schräg nach unten umgebogenen Rand 57 sich befindlichen Einstellskalen 58 bzw. 59 zusammen. Hierbei ist die Einstellskala 58 der kürzeren Wurfschaufel 44 zugeordnet und weist die Symbole niedrigerer Rangordnung auf, da diese kürzere Wurfschaufel 44 die der jeweiligen Schleuderscheibe 6 bzw. 7 zugeführten Düngemittelpartikel weiter nach innen, also in den inneren Bereich der Arbeitsbreite bzw. Streubreite abschleudern. Die Einstellskala 59 weist die Symbole höherer Rangordnung auf und ist der längeren Wurfschaufel 45 zugeordnet, die die Düngemittelpartikel weiter nach außen, also in den äußeren Bereich der Arbeitsbreite des Schleuderdüngerstreuers abschleudern.

Die Anordnung unterschiedlich langer Wurfschaufeln 44 bzw. 45 auf der jeweiligen Schleuderscheibe 6 bzw. 7 gewährleistet, daß die Düngemittelpartikel gleichmäßig über die gesamte Arbeitsbreite verteilt werden Die Anstellwinkel der Wurfschaufeln 44 bzw. 45 lassen sich unterschiedlich einstellen, in dem die Wurfschaufeln um den Drehpunkt, der von dem Bolzen 46 gebildet wird, nach Lösen der als Schnellverschluß ausgebildeten Knebelschraubenmutter 52, verschwenkt werden. Um nun bei einer ganz gestimmten Düngersorte unter Berücksichtigung der speziellen Streuguteigenschaften des auszustreuenden Düngers, eine ganz bestimmte Arbeitsbreite mit einer gleichmäßigen Düngerverteilung zu erzielen, ist es erforderlich, daß die Wurfschaufeln 44 bzw. 45 zur Erzeugung eines optimalen Streubildes, ohne Ober- oder Unterdüngung einzelner Bereiche, entsprechend eingestellt werden. Aus diesem Grunde sind die Skalen 58 und 59 mit unterschiedlichen Markierungen bzw. Symbolen ausgebildet. Hierdurch wird gewährleistet, daß die Wurfschaufeln 44 bzw. 45 unverwechselbar einstellbar sind, d.h., es ist nicht möglich, die aus der Streutabelle entnommenen Einstelldaten, die einer ganz bestimmten Wurfschaufel zugeordnet sind, fälschlicher Weise auf eine andere Wurfschaufel zu übertragen.

Soll nun beispielsweise eine ganz bestimmte Düngersorte über eine Streubreite von 16 m verteilt werden, so sind in der Streutabelle für den Schleuderdüngerstreuer, welche zu dem Düngerstreuer mitgeliefert wird, die Einstelldaten für die winkelverschwenkbaren Wurfschaufeln enthalten. Hierfür ist dann in der Streutabelle beispielsweise die Einstellung 2/37 angegeben. D.h., daß die kürzere Wurfschaufel 44 auf den Wert 2 und die längere Wurfschaufel 45 auf den Wert 37 der Einstellskalen 58 bzw. 59 einzustellen sind, wie dies beispielhaft in Fig. 5 dargestellt ist.

Da sich die spezifischen Streuguteigenschaften des auszustreuenden Düngers von Charge zu Charge und der Witterungsverhältnisse etc. gegenüber den in der Streutabelle enthaltenen Werten verändern können, ist es empfehlenswert, daß der Landwirt vor Beginn der Streuarbeit auf dem Feld eine Streuprobe mit einem nicht dargestellten mobilen Prüfstand durchführt. Mit Hilfe dieses mobilen Prüfstandes läßt sich die Arbeitsbreite und die gleichmäßige Düngerverteilung überprüfen. Wird nun festgestellt, daß beispielsweise im Außenbereich zu viel Dünger geworfen wird, so daß die Arbeitsbreite an sich zu groß eingestellt ist, so ist es erforderlich, daß die längere Wurfschaufel 45 auf einen Wert eingestellt wird, der einer kleineren Arbeitsbreite entspricht. Hierzu werden dann nach der erfindungsgemäßen Lösung die längeren Wurfschaufeln 45 anhand der Einstellskala 59 auf einen niedrigeren Wert eingestellt. Ist jedoch im Außenbereich zu wenig Dünger vorhanden, so daß an sich eine zu kleine Arbeitsbreite erreicht wird, so sind die längeren Wurfschaufeln 45 auf einen größeren Wert einzustellen. Ebenfalls wird dann entsprechend Verfahren, wenn in der Mitte der Arbeitsbreite zu wenig oder zu viel Dünger ausgebracht wird, so daß dann die kürzeren Wurfschaufeln 44 entsprechend zurück oder vorgeschwenkt werden müssen. Werden die Wurfschaufeln 44 bzw. 45 anhand der Skalen 58 bzw. 59 auf größere Zahlenwerte eingestellt, sind größere Wurfweiten erreichbar. Werden die Wurfschaufeln 44 bzw. 45 durch einen kleineren Wert anhand der jeweiligen Skala 58 bzw. 59 eingestellt, wird der Dünger weiter nach innen geworfen, also eine kleinere Wurfweite erreicht, so daß sich insgesamt für die gewünschte Arbeitsbreite eine gleichmäßige Düngerverteilung ergibt. Dieses ist für den Landwirt sehr einfach nachzuvollziehen, denn grundsätzlich heißt es, ein kleinerer Einstellwert bedeutet auch eine kleinere Arbeitsbreite, während ein größerer Einstellwert eine größere Arbeitsbreite bedeutet.

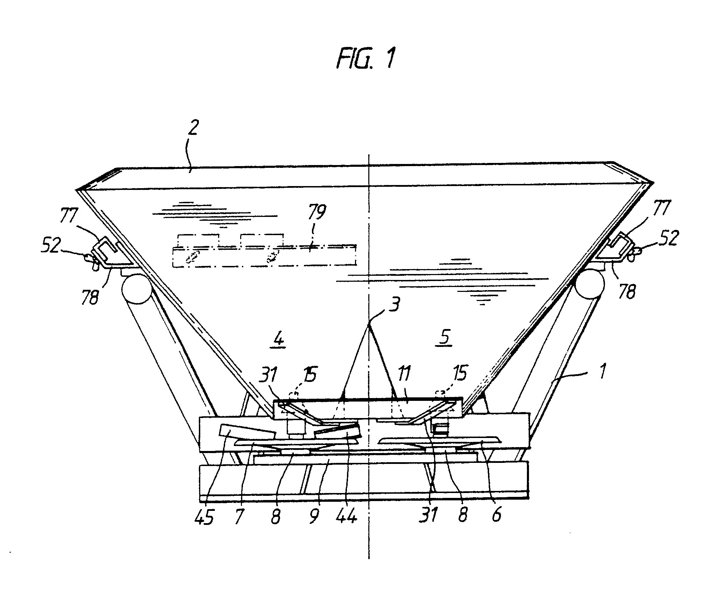

Damit sich nun bei dem Schleuderdüngerstreuer gemäß Fig. 1 eine Abdrehprobe oder Mengenkontrolle zur Ermittlung der vom Dosiermechanismus, der von den Auslauföffnungen 18 und den Schiebern 30 gebildet wird, der der Schleuderscheibe 6 zudosierten Düngermenge pro Flächeneinheit durchzuführen läßt, werden von der Schleuderscheibe 6 die wurfschaufeln 44 bzw. 45 abgenommen. Hierzu wird die jeweilige Knebelschraubenmutter 52 entfernt und die Wurfschaufeln 44 und 45 lassen sich nach dem Verschwenken der an den Wurfschaufeln 44 bzw. 45 befestigten Schrauben 53 in den Bereich der Langlochverlängerung 54 auf einfachste Weise von der Schleuderscheibe 6 abnehmen. Nach Abnahme der Wurfschaufeln 44 bzw. 45 von der Schleuderscheibe 6 wird die Düngerauffangvorrichtung 60 an den Schleuderdüngerstreuer befestigt. Hierzu wird die Düngerauffangvorrichtung 60 von unten mittels der Halterungen 62 in den Langlochschlitzen 63 der Bodenplatte 11 befestigt und stützt sich mit der Stützvorrichtung 64 von unten gegen die Bodenplatte 11 ab. Die Düngerauffangvorrichtung 60 weist im äußeren Bereich 65 der aus der Auslauföffnung 18 und dem Schieber 1 bestehenden Dosiervorrichtung einen auf der Schleuderscheibe 6 zumindest annähernd aufliegenden bzw. dicht oberhalb der Schleuderscheibe 6 befindlichen und sich von vorne nach hinten erstreckenden, als Abstreifvorrichtung 66 ausgebildeten Führungsschirm aus, der hinten über den Schleuderscheibenrand 67 übersteht. Unterhalb der Schleuderscheibe 6 und dem Ende 68 der Abstreifvorrichtung 66 ist der Auffangbehälter 61 über den Bügel 69 an der Düngerauffangvorrichtung 60 aufgehängt. Am Ende 68 der Abstreifvorrichtung 66 schließt sich im Abstand C zu dem Schleuderscheibenrand 67 der Leitschirm 70 an, der etwa bogenförmig um einen Teil der Schleuderscheibe 6 geführt ist. Desweiteren ist in Drehrichtung 24 der Schleuderscheibe 6 gesehen in einem Abstand von der Schleuderscheibendrehachse 50 in etwa radialer Richtung oder in einem spitzen Winkel von der von der Radialen abweichenden Richtung bis über den Schleuderscheibenrand 67 nach außen sich erstreckende Düngerableitwand 71 angeordnet, welche mit ihrem unteren Rand auf der Schleuderscheibe 6 zumindest annähernd aufliegt bzw. sich bis dicht oberhalb der Schleuderscheibe 6 erstreckt. Die Düngerableitwand 71 schließt sich unmittelbar an den Leitschirm 70 an.

In Draufsicht gesehen ist zwischen dem Schleuderscheibenrand 67 und dem Leitschirm 70 eine Öffnung 72 vorgesehen, durch welche der von der Schleuderscheibe 6 durch Zentrifugalkraft und/oder von der Düngerauffangvorrichtung 60, welche von der Abstreifvorrichung 66 und dem Düngerableitelement 71 gebildet wird, abgeleitete Dünger in den Düngerauffangbehälter 61 geleitet.

Die Funktionsweise der Düngerauffangvorrichtung 60 läßt sich wie folgt beschreiben:

Zur Ermittlung der der Schleuderscheibe 6 zudosierten Düngermenge pro Flächeneinheit wird die Düngerauffangvorrichtung 60 in der vorbeschriebenen Weise an der Bodenplatte 11 befestigt, nach dem die Wurfschaufeln 44 bzw. 45 der Schleuderscheibe 6 demontiert worden sind. Zunächst wird der Antrieb der Schleuderscheiben 6 und 7 eingeschaltet, so daß die Schleuderscheiben 6 und 7 in entgegengesetzter Drehrichtung zueinander angetrieben werden. Anschließend wird während einer bestimmten Zeit die der Schleuderscheibe 6 zugeordnete Auslauföffnung 18 in bestimmter Größe durch den Schieber 30 geöffnet, während die der Schleuderscheibe 7 zugeordnete Auslauföffnung 18 verschlossen bleibt. Der durch die Auslauföffnung 18 austretende und auf die Schleuderscheibe 6 auftreffende Dünger wird durch das Abstreifelement 66 bis über den Schleuderscheibenrand 67 dem Düngerauffangbehälter 61 zugeleitet. Damit evtl. relativ stark beschleunigter Dünger nicht über den Rand des Auffangbehälters 61 hinausfällt, wird dieser Dünger von dem Leitschirm 70 aufgefangen und in den Auffangbehälter 61 geleitet. Sollte evtl. aufgrund der nicht ausreichenden Zentrifugalkraft der Dünger nicht bis über den Schleuderscheibenrand 67 in den Auffangbehälter 61 gelangen, wird dieser sich dann noch auf der Schleuderscheibe 6 befindliche Dünger von der Düngerableitwand 71 von der Schleuderscheibe abgeleitet und dem Auffangbehälter 61 zugeleitet.

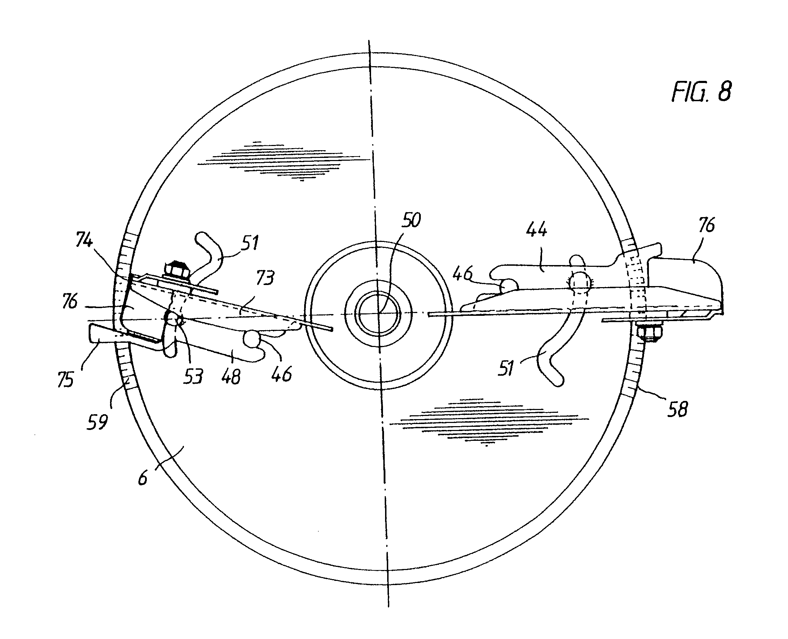

Um den Schleuderdüngerstreuer zum Grenzstreuen einsetzten zu können, wird die lange Wurfschaufel 45 entsprechend Fig. 5 gegen die Grenzstreuschaufel 73 entsprechend Fig. 8 ausgetauscht. Mittels der Grenzstreuschaufel 73, die mit ihrem Abstreuende 74 einen kürzeren Abstand zur Drehachse 50 als die lange Wurfschaufel 45 aufweist, und der kurzen Wurfschaufel 44 wird beim Grenzstreuen ein Streubild mit einer seitlich steil abfallenden Streuflanke erzielt; d.h., daß auf der rechten Seite des Schleuderdüngerstreuers bis zum Feldrand der Dünger mit gleichbleibender Streustärke bis an den Feldrand herangeworfen wird, und daß auf der linken Seite weiterhin ein flach abfallendes Streubild erhalten bleibt. Zum Austausch der langen Wurfschaufel 45 gegen die Grenzstreuschaufel 73 wird die Knebelschraubenmutter 52 auf dem Schraubbolzen 53 gelöst und von dem Schraubbolzen abgenommen. Dann wird die Wurfschaufel 45 ganz zu der Seite des Langloches 51 verschwenkt, auf der sich die Langlochverlängerung 54 befindet. Nun wird die Wurfschaufel 45 nach außen gezogen und anschließend von der Schleuderscheibe 6 abgenommen. Anschließend wird die Grenzstreuschaufel 73 auf der Schleuderscheibe 6 montiert. Nachdem die Knebelschraube 52 auf den Schraubbolzen 53 der Grenzstreuschaufel 73 aufgeschraubt ist, wird die Grenzstreuschaufel 73 in die in der Streutabelle angegebene Position verschwenkt; d.h., mit Hilfe des Zeigers 75 wird die Grenzstreuschaufel 73 auf dem in der Streutabelle angegebenen Wert für die entsprechende Arbeitsbreite eingestellt. Am äußeren Ende der Grenzstreuschaufel 73 ist der Schwenkflügel 76 in aufrechter Ebene verschwenkbar und in zwei Positionen einstellbar angeordnet. Die untere Position ist für die Normaldüngung und die obere Position, wie in Fig. 13 dargestellt, für die Spätdüngung vorgesehen.

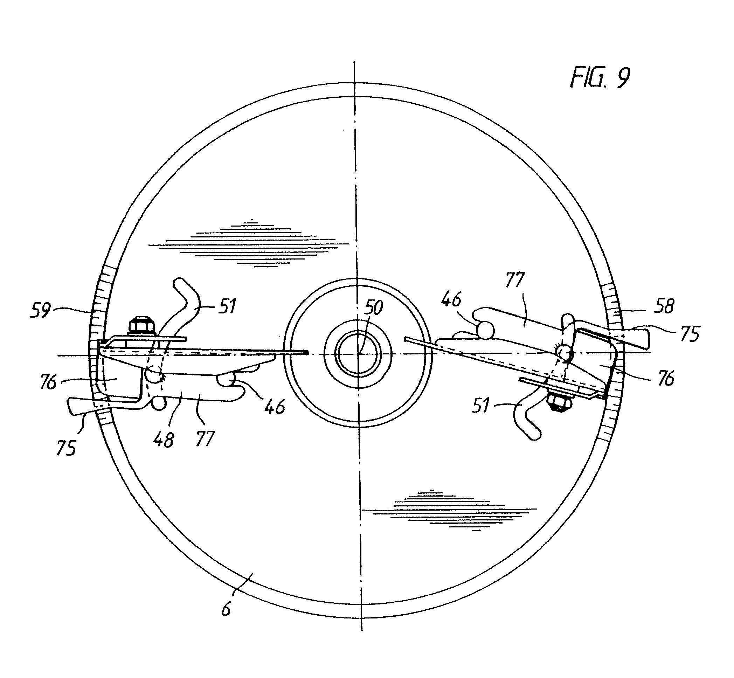

In einem weiteren Ausführungsbeispiel gemäß Fig. 9 werden zum Einsatz des Schleuderdüngerstreuers zum Grenzstreuen die beiden Wurfschaufeln 44 und 45 gemäß Fig. 5 für das Normalstreuen gegen die beiden Grenzstreuschaufeln 77 ausgetauscht. Dieser Austausch geschieht wie bereits für die Grenzstreuschaufel 73 gemäß Fig. 8 beschrieben. Die Grenzstreuschaufeln 77 gemäß Fig. 9 werden auf die gleichen Skalenwerte der Skalen 58 und 59 wie die Normalstreuschaufeln 44 und 45 bei gleicher Arbeitsbreite und Düngersorte eingestellt. Mittels des Schnellverschlusses 52 sind also die Wurfschaufeln 44 und 45 für das Normalstreuen auf einfachste Weise gegen die Grenzstreuschaufeln 77 auswechselbar auf der Schleuderscheibe 6 angeordnet. Auch die Grenzstreuschaufeln 77 weisen an ihrem äußeren Ende jeweils den Schwenkflügel 76 auf, mittels derer sich auf einfache Weise auch beim Spätdüngen das Grenzstreuen (Streubild mit steil abfallender Streuflanke) erreichen läßt. Die Grenzstreuschaufeln 77 gemäß Fig. 9 können auch zum Reihenstreuen in Verbindung mit einer nicht dargestellten Reihenstreuvorrichtung eingesetzt werden. Hierdurch ergibt sich der Vorteil, daß die Düngerpartikel innerhalb der Reihenstreuvorrichtung mit relativ geringer Geschwindigkeit gleichmäßig über die Reihenstreuvorrichtung verteilt werden, so daß sämtlichen Ausläufen der Reihenstreuvorrichtung die gleiche Düngermenge schonend zugeführt wird.

Die nicht benötigten Grenzstreuschaufeln 77 werden beim Normalstreuen, wenn die Streuschaufeln 44 und 45 zum Einsatz kommen, an der Halterung 78 gemäß Fig. 1 mittels des Schnellverschlusses 52 angeordnet. Wenn die Grenzstreuschaufeln 77 zum Einsatz kommen, werden an der Halterung 78 die Normalstreuschaufeln 44 und 45 befestigt und sicher mitgeführt. Anstelle der Halterung 78 kann auch die mit strichpunktierten Linien angedeutete Halterung 79 auf der Rückseite des Schleuderdüngerstreuers an besonders gut zugänglicher Stelle vorgesehen sein. Hierdurch werden die Wechsel-Wurfschaufeln an der Maschine fest gelagert und sind schnell zur Montage auf den Schleuderscheiben 6 und 7 bereit.

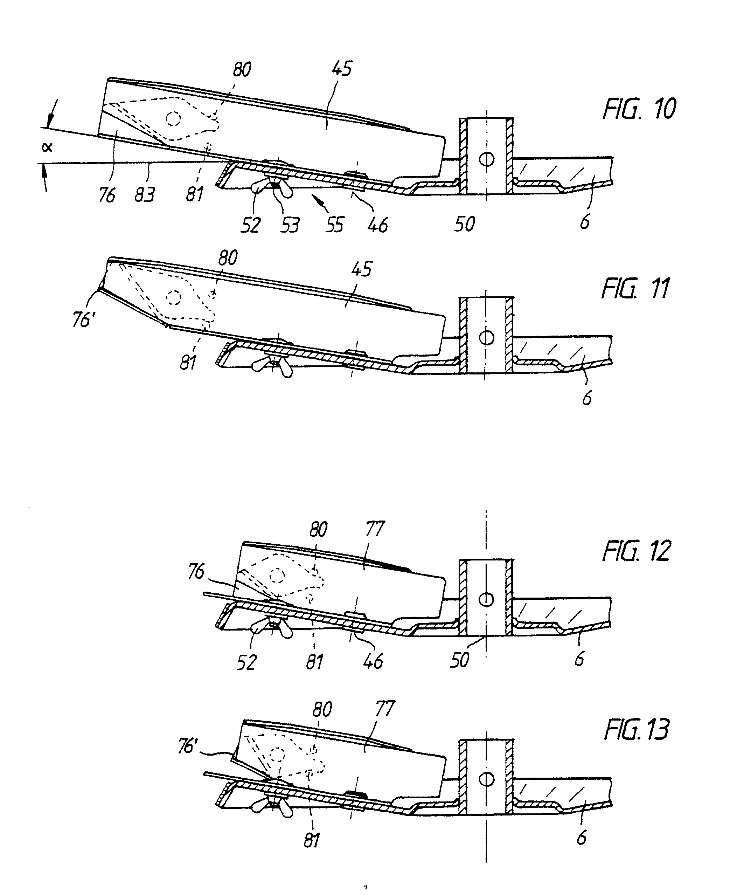

Wie bereits vor gesagt, befinden sich auf den Schleuderscheiben 6 und 7 jeweils die Wurfschaufeln 44 und 45 zum Normaldüngen. In Fig. 10 ist die Schleuderscheibe 6 im Schnitt mit der langen Wurfschaufel 45 dargestellt. Hierbei befindet sich der Schwenkflügel 76 der langen Normalstreuschaufel 45 in Normaldüngungsposition. Die Normaldüngungsposition des Schwenkflügels 76 wird durch den Anschlag 80 bestimmt. Um das Spätdüngen durchführen zu können, wird der Schwenkflügel in die Position 76′ geschwenkt. Diese Position wird durch den Anschlag 81 bestimmt. Dadurch, daß der Schwenkflügel sich in der Position 76′ befindet, wird der Dünger mit einem größeren Abwurfwinkel abgeschleudert, so daß der Streufächer der von den Wurfschaufeln 44 und 45 erzeugt wird, etwas angehoben wird, so daß der Dünger über das bereits hoch aufgewachsene Getreide gleichmäßig verteilt wird. Selbstverständlich werden die Schwenkflügeln bei allen Wurfschaufeln zum Spätdüngen hochgeschwenkt.

Wenn der Schleuderdüngerstreuer zum Grenzstreuen eingesetzt wird, werden, wie bereits anhand der Fig. 9 beschrieben ist, die Normalstreuschaufeln 44 und 45 gegen die Grenzstreuschaufeln 77 ausgetauscht. Beim Grenzstreuen bei der Normaldüngung befindet sich der Schwenkflügel 76 in der in Fig. 12 dargestellten Position. Diese Position 76 wird durch den Anschlag 80 ebenfalls bestimmt. Wenn das Grenzstreuen beim Spätdüngen durchgeführt wird, wird der Schwenkflügel in die in Fig. 13 dargestellte Position 76′ geschwenkt, so daß beim Spätdüngen beim Grenzstreuen ebenfalls der Streufächer anhebbar ist. Bei den Wurfschaufeln 44 und 45 der Schleuderscheibe 7, die zum Feldinneren streut, werden die Schwenkflügel beim Spätdüngen ebenfalls gemäß Fig. 11 in die Position 76′ geschwenkt. Die Position 76′ wird durch den Anschlag 81 bestimmt.

## Ansprüche

1. Schleuderdüngerstreuer mit einem Rahmen, einem Vorratsbehälter, der in seinem unteren Bereich durch ein dachförmiges Mittelteil in zwei Trichterspitzen unterteilt ist, wobei unterhalb jeder Trichterspitze eine rotierend angetriebene Schleuderscheibe mit Wurfschaufeln angeordnet ist, wobei die Schleuderscheiben jeweils auf einer Antriebswelle eines Getriebes angeordnet sind, wobei die Antriebswellen bzw. ihre Verlängerungen jeweils ein Rührorgan direkt antreiben bzw. tragen, dadurch gekennzeichnet, daß die Wurfschaufeln (44,45,73,77) auf den Schleuderscheiben (6,7) winkelverschwenkbar angeordnet sind, und daß im Bereich der verschwenkbaren Wurfschaufeln (44,45,73,77) Einstellskalen (58,59) für die Schaufeln (44,45,73,77) auf der Schleuderscheibe (6,7) angeordnet sind.

2. Schleuderdüngerstreuer nach Anspruch 1, dadurch gekennzeichnet, daß zumindest zwei Wurfschaufeln (44,45,73,77) auf jeder Schleuderscheibe (6,7) angeordnet sind, daß sich für jede Wurfschaufel (44,45,73,77) bei Einstellung des horizontalen Abwurfwinkels Einstellmarkierungen (58,59) auf der Schleuderscheibe (6,7) befinden, welche unterschiedlich ausgebildet und/oder bezeichnet sind und zwar derart, daß die Markierungspunkte (58,59) eindeutig und unverwechselbar jeweils einer Schleuderscheibe (6,7) zugeordnet sind.

3. Schleuderdüngerstreuer nach einem oder mehreren der vorstehenden Ansprüche, dadurch gekennzeichnet, daß die Markierungspunkte unverwechselbare Symbole, insbesondere Zahlen, in Drehrichtung (24,15) der Schleuderscheiben (6,7) jeweils ansteigend auf der Skala (58,59) aufweisen.

4. Schleuderdüngerstreuer nach Anspruch 1, dadurch gekennzeichnet, daß der längeren und/oder weiter nach außen streuenden Wurfschaufel (45) die Symbole höherer Rangordnung und der kürzeren und/oder weiter nach innen streuenden Wurfschaufel (44) die Symbole niedriger Rangordnung zugeordnet sind.

5. Schleuderdüngerstreuer nach Anspruch 1, dadurch gekennzeichnet, daß den kürzeren und/oder weiter nach innen streuenden Wurfschaufeln (44) der beiden Schleuderscheiben (6,7) die gleichen Symbole auf den Skalen (58,59) zugeordnet sind, während den längeren und/oder weiter nach außen streuende Wurfschaufeln (45) der beiden Schleuderscheiben (6,7) ebenfalls die gleichen Symbole auf den Skalen (58,59) zugeordnet sind.

6. Schleuderdüngerstreuer nach Anspruch 1, dadurch gekennzeichnet, daß die Schleuderscheiben (6,7) in entgegengesetztem Drehsinn (24,25) rotierend zueinander angetrieben sind, wobei die Wurfschaufeln (44,45) der beiden Schleuderscheiben (6,7) zueinander spiegelbildlich ausgebildet sind, und daß die Skalen (58,59) zu den entsprechend anderen Skalen (58,59) der anderen Schleuderscheibe (6 bzw. 7) ebenfalls spiegelbildlich zueinander ausgebildet sind.

7. Schleuderdüngerstreuer nach Anspruch 1, dadurch gekennzeichnet, daß jeder Wurfschaufel (44,45) aller Schleuderscheiben (6,7) jeweils eigene und unverwechselbare Symbole auf den Skalen (58,59) zugeordnet sind.

8. Schleuderdüngerstreuer nach Anspruch 1, dadurch gekennzeichnet, daß die Symbole Zahlen sind.

9. Schleuderdüngerstreuer nach einem oder mehreren der vorstehenden Ansprüche, dadurch gekennzeichnet, daß auf einer Schleuderscheibe (6,7) zumindest zwei winkelverschwenkbare Wurfschaufeln (44,45) an geordnet sind, daß die Wurfschaufeln (44,45) derart ausgebildet und einstellbar sind, daß sie den Dünger gleichmäßig über die zubestreuende Arbeitsbreite abschleudern, so daß die eine Wurfschaufel (44,45) die Düngemittelpartikel weiter nach innen, also in den inneren Bereich der Arbeitsbreite abschleudert, und daß die andere Wurfschaufel (44) die Düngemittelpartikel weiter nach außen, also in den äußeren Bereich der Arbeitsbreite abschleudert, daß der die Düngemittel weiter nach außen streuenden Wurfschaufel (45) die Symbole höherer Rangordnung (59) und der die Düngemittel weiter nach innen streuenden Wurfschaufel (44) die Symbole niedriger Rangordnung (58) zugeordnet sind.

10. Schleuderdüngerstreuer nach einem oder mehreren der vorstehenden Ansprüche, dadurch gekennzeichnet, daß die auf einer Schleuderscheibe (6,7) angeordneten Wurfschaufeln (44,45) aus gleichlangen Wurfschaufeln bestehen, daß die eine Wurfschaufel die Düngemittelpartikel weiter nach innen, also in den inneren Bereich der Arbeitsbreite abschleudert, und daß die andere Wurfschaufel die Düngemittelpartikel weiter nach außen, also in den äußeren Bereich der Arbeitsbreite abschleudert, daß der die Düngemittel weiter nach außen streuenden Wurfschaufel die Symbole höherer Rangordnung und der die Düngemittel weiter nach innen streuenden Wurfschaufel die Symbole niedriger Rangordnung zugeordnet sind. abschleudert.

11. Schleuderdüngerstreuer nach einem oder mehreren der vorstehenden Ansprüche, dadurch gekennzeichnet, daß die die Düngemittelpartikel weiter nach innen streuende Wurfschaufel (44) die Düngemittelpartikel mit verringerter Energie abschleudert.

12. Schleuderdüngerstreuer nach einem oder mehreren der vorstehenden Ansprüche, dadurch gekennzeichnet, daß auf einer Schleuderscheibe (6,7) mehrere unterschiedlich ausgebildete Wurfschaufeln (44,45) angeordnet sind, die die Düngemittel jeweils über einen bestimmten Bereich innerhalb der Arbeitsbreite des Schleuderdüngerstreuers abschleudern, daß den die Düngemittel weiter nach außen streuenden Wurfschaufeln (45) die Symbole (59) höherer Rangordnung und den die Düngemittel weiter nach innen streuenden Wurfschaufeln (44) die Symbole (58) niedriger Rangordnung zugeordnet sind.

13. Schleuderdüngerstreuer nach einem oder mehreren der vorstehenden Ansprüche, dadurch gekennzeichnet, daß sich die Symbole (58,59) zum Einstellen winkelverschwenkbarer Wurfschaufeln jeglicher Bauart oder Ausführungsform zuordnen lassen.

14. Schleuderstreuer nach einem oder mehreren der vorstehenden Ansprüche, dadurch gekennzeichnet, daß die Wurfschaufeln (44,45,73,77) mittels Knebelschrauben (52,53) werkzeuglos verstellbar bzw. einstellbar auf den Schleuderscheiben (6,7) angeordnet sind.

15. Schleuderdüngerstreuer nach einem oder mehreren der vorstehenden Ansprüche, dadurch gekennzeichnet, daß die Knebelschraube (52) unter der Schleuderscheibe (6,7) angeordnet ist.

16. Schleuderdüngerstreuer nach einem oder mehreren der vorstehenden Ansprüche, dadurch gekennzeichnet, daß je Wurfschaufel (44,45,73,77) nur eine Knebelschraube (52,53) vorgesehen ist, wobei diese Knebelschraube (52,53) in der Nähe des äußeren Randes (57) der Scheibe angeordnet ist.

17. Schleuderdüngerstreuer nach einem oder mehreren der vorstehenden Ansprüche, dadurch gekennzeichnet, daß die äußere, mit der Knebelschraubenmutter (52) zusammenwirkende Schraube (53) mit der Wurfschaufel (44,45,73,77) jeweils fest verbunden, beispielsweise verschweißt ist.

18. Schleuderdüngerstreuer nach einem oder mehreren der vorstehenden Ansprüche, dadurch gekennzeichnet, daß die Schleuderscheiben (6,7) einen schräg nach unten umgebogenen Rand (57) aufweisen, daß die Skalen (58,59) auf dem schräg nach außen und unten verlaufenden Rand (57) der Schleuderscheiben (6,7) angeordnet sind.

19. Schleuderdüngerstreuer nach einem oder mehreren der vorstehenden Ansprüche, dadurch gekennzeichnet, daß der untere Steg (48) der Wurfschaufel (44,45,73,77) als Zeigerelement (56,75) ausgebildet ist und mit der entsprechenden Einstellskala (58,59) der Wurfschaufel (44,45,73,77) zusammenwirkt.

20. Schleuderdüngerstreuer nach einem oder mehreren der vorstehenden Ansprüche, dadurch gekennzeichnet, daß die Wurfschaufeln (44,45,73,77) auf ihrer der Drehachse (50) zugewandten Seite in ihrem unteren Steg (48) einen in radialer Richtung verlaufenden Schlitz (49) aufweisen, welcher auf der inneren Seite nach außen offen ist, daß auf der Schleuderscheibe (6,7) ein innerer Bolzen (46) mit einem gegenüber dem Bolzen einen größeren Durchmesser aufweisenden Kopf (47) angeordnet ist, daß der Schlitz (49) der Wurfschaufeln (44,45,73,77) auf den Bolzen (46) aufschiebbar ist.

21. Schleuderdüngerstreuer nach einem oder mehreren der vorstehenden Ansprüche, dadurch gekennzeichnet, daß in der Schleuderscheibe (6,7) jeweils in deren äußeren Bereich über den Schwenkbereich der Wurfschaufeln (44,45,73,77) mit dem Radius (r) gekrümmte Langlöcher (51) angeordnet sind, daß durch diese Langlöcher (51) die mit der Knebelschraubenmutter (52) zusammenwirkende Schraube (53) gesteckt wird, und daß an dem einen Ende des Langloches (51) jeweils eine sich etwa in radialer Richtung bzw. von der Tangentialen abweichenden Richtung erstreckende Langlochverlängerung (54) anschließt, daß diese Langlochverlängerung (54) zumindest der Schlitzlänge (5) des sich auf der inneren Seite der Wurfschaufel (44,45,73,77) befindlichen Schlitzes (49) entspricht.

22. Schleuderdüngerstreuer nach einem oder mehreren der vorstehenden Ansprüche, dadurch gekennzeichnet, daß die Wurfschaufeln (44,45) auswechselbar, insbesondere gegen Wurfschaufeln (73,77) anderer Länge auf den Schleuderscheiben angeordnet sind.

23. Schleuderdüngerstreuer nach einem oder mehreren der vorstehenden Ansprüche, dadurch gekennzeichnet, daß an dem Schleuderdünger streuer eine Halterung (78,79) vorgesehen ist, an welcher die nicht zum Einsatz kommenden Streuschaufeln (44,45,73,77) leicht zugänglich mitgeführt werden.

24. Schleuderdüngerstreuer nach einem oder mehreren der vorstehenden Ansprüche, dadurch gekennzeichnet, daß die Schleuderscheiben (6,7) auswechselbar angeordnet sind.

25. Schleuderdüngerstreuer nach einem oder mehreren der vorstehenden Ansprüche, dadurch gekennzeichnet, daß die Wurfschaufeln (44,45) zum Normalstreuen gegen wesentlich kürzere Wurfschaufeln zum Reihendüngerstreuen austauschbar sind.

26. Schleuderdüngerstreuer nach einem oder mehreren der vorstehenden Ansprüche, dadurch gekennzeichnet, daß die Wurfschaufeln zum Normalstreuen gegen Wurfschaufeln zum Spätdüngen, die eine nach oben gegenüber der Normalstreurichtung gerichtete untere Leitfläche aufweisen, auswechselbar sind.

27. Schleuderdüngerstreuer nach einem oder mehreren der vorstehenden Ansprüche, dadurch gekennzeichnet, daß Wurfschaufeln (44,45,73,77) vorgesehen sind, die an ihrem äußeren Ende in aufrechter Richtung bewegbare untere Leitflächen (76) aufweisen.

28. Schleuderdüngerstreuer nach einem oder mehreren der vorstehenden Ansprüche, dadurch gekennzeichnet, daß zum Grenzstreuen spezielle Wurfschaufeln (73,77) vorgesehen sind, deren äußeres wurfaktives Ende einen wesentlich kürzeren Abstand zur Drehachse (50) als die Normalstreuschaufeln (44,45) aufweisen, und daß diese Grenzstreuschaufeln (73,77) ebenfalls winkelverschwenkbar auf den Schleuderscheiben (6,7) angeordnet sind.

29. Schleuderdüngerstreuer nach einem oder mehreren der vorstehenden Ansprüche, dadurch gekennzeichnet, daß die Grenzstreuschaufeln (73,77) wesentlich kürzer als die Normalstreuschaufeln (44,45) sind, aber derart ausgebildet sind, daß sie mit den Skalen (58,59) zusammenwirken und zwar derart, daß sie auf den gleichen Skalenwert eingestellt werden wie die Normalstreuschaufeln (44,45) für die gleiche Düngerart und Arbeitsbreite.

30. Schleuderdüngerstreuer nach einem oder mehreren der vorstehenden Ansprüche, dadurch gekennzeichnet, daß zum Grenzstreuen nur eine Wurfschaufel (73,77) pro Schleuderscheibe (6,7) eingesetzt wird.

31. Schleuderdüngerstreuer nach einem oder mehreren der vorstehenden Ansprüche, dadurch gekennzeichnet, daß nur die längere der Normalstreuschaufeln (45) gegen eine kürzere Grenzstreuschaufel (73) ausgetauscht wird, wenn der Schleuderdüngerstreuer zum Grenzstreuen eingesetzt wird.

32. Schleuderdüngerstreuer nach einem oder mehreren der vorstehenden Ansprüche, dadurch gekennzeichnet, daß die eingetauschte Grenzstreuschaufel (73) genauso lang oder kürzer als die kurze Normalstreuschaufel (44) ist und vorzugsweise als Teleskopschaufel ausgebildet ist.

33. Schleuderdüngerstreuer nach einem oder mehreren der vorstehenden Ansprüche, dadurch gekennzeichnet, daß zum Grenzstreuen die Normalstreuschaufeln (44,45) gegen spezielle Schaufeln (77) für das Grenzstreuen ausgetauscht werden.

34. Schleuderdüngerstreuer nach einem oder mehreren der vorstehenden Ansprüche, dadurch gekennzeichnet, daß die Grenzstreuschaufeln (77) derart ausgebildet sind, daß sie gleichzeitig zum Reihendüngerstreuen einsetzbar sind.

35. Schleuderdüngerstreuer nach einem oder mehreren der vorstehenden Ansprüche, dadurch gekennzeichnet, daß die Wurfschaufeln (44,45,73,77) mittels eines Schnellverschlusses (52) auf den Schleuderscheiben (6,7) anzuordnen sind.

36. Schleuderdüngerstreuer nach einem oder mehreren der vorstehenden Ansprüche, dadurch gekennzeichnet, daß der Schnellverschluß als Knebelschraube (52) oder Knebelmutter (52) ausgebildet ist, und daß die Wurfschaufeln (44,45,73,77) mittels des Schnellverschlusses winkelverstellbar sind.

37. Schleuderdüngerstreuer nach einem oder mehreren der vorstehenden Ansprüche, dadurch gekennzeichnet, daß die Wurfschaufeln (44,45,73,77) auf den Schleuderscheiben (6,7) abnehmbar angeordnet sind, daß nach Abnahme der Wurfschaufeln (44,45,73,77) von einer Schleuderscheibe (6) eine Auffangvorrichtung (60) auf oder im Bereich dieser Schleuderscheibe (6) anzuordnen ist, und daß unterhalb der Auffangvorrichtung (60) ein Auffangbehälter (61) anzuordnen ist.

38. Schleuderdüngerstreuer nach einem oder mehreren der vorstehenden Ansprüche, dadurch gekennzeichnet, daß nach Abnahme der Wurfschaufeln (44,45,73,77) von der Schleuderscheibe (6) eine Abstreifvorrichtung (66) auf dieser Schleuderscheibe (6) angeordnet wird, und daß am Ende der Abstreifvorrichtung (66) ein Auffangbehälter (61), beispielsweise ein untergehängter Eimer angeordnet ist.

FIG. 1

FIG 2

FIG. 3

EP 0 433 562 A2

FIG. 4

FIG. 5

EP 0 433 562 A2

# FIG. 6

FIG. 7

FIG. 8

FIG. 9

EP 0 433 562 A2

FIG. 10

FIG. 11

FIG. 12

FIG. 13

22